# NEUE EUROPÄISCHE PATENTSCHRIFT

(11) **EP 0 868 760 B2**
(45) Veröffentlichungstag und Bekanntmachung des Hinweises auf die Entscheidung über den Einspruch: **18.11.2009**
(45) Hinweis auf die Patenterteilung: 17.05.2000
(21) Anmeldenummer: 96944628.5
(22) Anmeldetag: 20.12.1996
(51) Int. Cl.: H01M 8/10, C25B 11/12

(54) **KONTINUIERLICHES VERFAHREN ZUR HERSTELLUNG VON MEMBRAN-ELEKTRODEN-VERBUNDEN (MEA)**
PROCESS FOR CONTINUOUS PRODUCTION OF MEMBRANE-ELECTRODE COMPOSITES
PROCEDE DE PRODUCTION EN CONTINU DE COMPOSITES MEMBRANE-ELECTRODE

(30) Priorität: 22.12.1995 DE 19548421
(43) Veröffentlichungstag der Anmeldung: 07.10.1998
(73) Patentinhaber: BASF Fuel Cell GmbH, 65926 Frankfurt am Main (DE)
(72) Erfinder: BÖNSEL, Harald, D-65529 Waldems (DE); CLAUSS, Joachim, D-65929 Frankfurt am Main (DE); DECKERS, Gregor, D-65929 Frankfurt am Main (DE); FRANK, Georg, D-72074 Tübingen (DE); SCHNELLER, Arnold, D-64409 Messel (DE); WITTELER, Helmut, D-65929 Frankfurt am Main (DE); RÖMMLER, Mike, D-10437 Berlin (DE); HEINE, Michael, D-86695 Allmanshofen (DE)
(74) Vertreter: Luderschmidt, Schüler & Partner
(86) Internationale Anmeldenummer: PCT/EP1996/005792
(87) Internationale Veröffentlichungsnummer: WO 1997/023919

(56) Entgegenhaltungen:
- EP-A- 0 339 717
- EP-A- 0 352 450
- EP-A- 0 574 791
- EP-A- 0 599 791
- WO-A-94//14203
- DE-A- 3 110 792
- DE-A- 19 548 421
- DE-C- 4 241 150
- DE-C2- 2 951 965
- JP-A- 63- 269 458
- OS-A- 1 471 649
- US-A- 3 134 697
- US-A- 3 393 100
- US-A- 4 175 165
- US-A- 4 287 232
- US-A- 4 336 217
- US-A- 4 469 579
- US-A- 4 569 730
- US-A- 4 826 554
- US-A- 4 988 582
- US-A- 5 176 966
- US-A- 5 211 984
- US-A- 5 219 673
- US-A- 5 290 642
- US-A- 5 399 184
- US-A- 5 470 357
- PATENT ABSTRACTS OF JAPAN vol. 018, no. 263 (E-1550), 19.Mai 1994 & JP 06 044984 A (MITSUBISHI HEAVY IND LTD), 18.Februar 1994,
- PATENT ABSTRACTS OF JAPAN vol. 018, no. 586 (E-1627), 9.November 1994 & JP 06 223836 A (AQUEOUS RES:KK), 12.August 1994,
- BOLWIN ET AL: 'Preparation of porous electrodes and laminated electrode-membrane Structures.' SOLID STATE IONICS 1995,
- Suchresultate aus Uncover Datenbank betreffend den Publikationszeitpunkt von D2.
- SWETTE ET AL: 'Proton-exchange membrane regenerative fuel cells.' J. POWER SOURCES 1994, Seiten 343 - 351
- PROC.OF THE 27TH INTERSOCIETY ENERGY CONVERSION ENGINEERING CO 03 August 1992 - 07 August 1992, Seiten 1101 - 1106
- SEDLAK ET AL: 'Advances in Oxygen Evolution Catalysis' INT. J. HYDROGEN ENERGY 1981, Seiten 159 - 165
- Entscheidung des DPMA vom 15.04.1997, betreffend DE 19548421 A1
- Beschluss des Bundespatentgerichts vom 09.08.1999 in re DE 19548421.5-45.
- D.P. WILKINSON ET AL J.POWER SOURCES 49 1994, Seiten 117 - 127

## Beschreibung

Brennstoffzellen sind elektrochemische Systeme, die chemische Energie in elektrische Energie umwandeln können. So wandelt eine Wasserstoff/Sauerstoff-Brennstoffzelle diese Gase unter Freisetzung von elektrischer Energie in Wasser um.

Brennstoffzellen bestehen aus einer Anordnung mehrerer, durch bipolare Platten getrennter Membranelektrodeneinheiten, einem sogenannten Stack, wobei die Membranelektrodeneinheiten (MEA) wiederum aus zwei katalytisch aktiven Elektroden zur elektrochemischen Umsetzung der chemischen Substanzen sowie einem ionenleitenden Elektrolyten zwischen den Elektroden zum Ladungstransport aufgebaut sind. Die Bipolarplatten dienen der Trennung der Gasräume und der elektrischen Verknüpfung der Einzelzellen. Modernere Brennstoffzellenkonstruktionen, die bei tiefen Temperaturen arbeiten, enthalten keine Flüssigelektrolyte, sondern leitfähige polymere lonenaustauschermembranen (polymere Festelektrolyte).

Die derzeit erfolgversprechendsten Herstellungsverfahren für Membranelektroden-einheiten sind ein Tränk- und ein Casting-Verfahren, an die sich jeweils ein Heißverpressen der Komponenten anschließt.

Beim Tränkverfahren streicht man einen gelösten Festelektrolyten auf die Elektrodenoberfläche auf oder sprüht ihn als Emulsion mittels eines Druckgases auf; er vermag wenige Mikrometer in das Porensystem einzudringen. Anschließend verpresst man die präparierten Elektroden unter Erwärmung, bis die Elektrodenmembran mit ihnen verschmilzt. Ein solches Verfahren zur Herstellung von Membranelektrodeneinheiten wird z.B. in US-A-5 211984 beschrieben, wo eine Kationenaustauschermembran mit einer Kationenaustauscherlösung, in der ein Platinkatalysator suspendiert ist, beschichtet wird. Dieses Verfahren ist auch unter der Bezeichnung "Ink-Verfahren" bekannt.

Beim Casting vermengt man den gelösten Festelektrolyten mit dem Katalysatormaterial und gegebenenfalls einem Hydrophobierungsmittel, z.B. Polytetrafluorethylen (PTFE), zu einer Paste. Diese wird entweder zunächst auf einen Träger aufgebracht oder aber direkt auf die Membran gestrichen und dann mit ihr heißverpreßt, um die Kontaktwiderstände an den Übergängen zwischen Membran und den in der Paste oder auf der Elektrode befindlichen Festelektrolytschichten zu minimieren.

Ein weiteres Verfahren zur Herstellung von Elektrodenmembran-Verbunden aus einem einen Kernbereich bildenden lonenaustauschermaterial und beidseitig daran kontaktierten Elektroden für Brennstoffzellen wird in DE-C-42 41 150 beschrieben. Das lonenaustauschermaterial wird hierbei aus in Lösemittel löslichen, zumindest einen in Ionen dissozierbaren Rest aufweisenden Homo- oder Copolymeren gebildet.

Alle Präparationsverfahren für Gasdiffusionselektroden mit Polymermembranen erfordern eine Vielzahl meist manueller und schwer automatisierbarer Arbeitsgänge. Was für Versuche im Labormaßstab tragbar ist, führt bei der industriellen Fertigung oft, vor allem wegen der hohen Kosten, zu unüberwindbaren Hindernissen.

Obwohl Brennstoffzellen bereits in der Raumfahrtindustrie Anwendung finden, ist z.B. ein allgemeiner kommerzieller Einsatz in der Automobilindustrie in nächster Zeit nicht in Sicht, da die Herstellungskosten insbesondere für Membranelektrodeneinheiten und den daraus resultierenden Brennstoffzellen einige Größenordnungen über den Kosten für konventionelle Verbrennungsmotoren liegen. Auch für den Einsatz in der dezentralen Energieversorgung sind die heute verfügbaren Brennstoffzellen, z.B. im Vergleich mit Öl- und Gasheizungen oder Dieselaggregaten zu teuer.

Für die Anwendung im Auto bilden die Brennstoffzellen in Verbindung mit einem Elektroantrieb hingegen ein neues Antriebskonzept mit einigen Vorteilen. So kommt es bei einer Brennstoffzelle, die z.B. mit Wasserstoff und Sauerstoff betrieben wird, zu keiner Schadstoffemission am Fahrzeug und auch die Emission über die gesamte Energieumwandlungskette ist geringer als bei anderen Fahrzeugantriebssystemen. Ferner ist der Gesamtwirkungsgrad bezogen auf die Primärenergie deutlich höher. Der Einsatz von Brennstoffzellen in der Automobilindustrie würde einen merklichen Beitrag leisten, verkehrbedingte Schadstoffemissionen und den Verbrauch an Energieressourcen zu verringern.

Es besteht daher die Aufgabe ein Verfahren zur Herstellung von Membranelektrodeneinheiten, die für den Einsatz in Brennstoffzellen geeignet sind, bereitzustellen, das deren Fertigung in einer Weise erlaubt, daß die Herstellungskosten und die Leistung den Anforderungen der Anwender genügen.

Die vorliegende Erfindung löst diese Aufgabe durch die Bereitstellung eines Verfahrens gemäß Anspruch 1. Bevorzugte Ausführungsformen sind in den Ansprüchen 2 bis 22 aufgezeigt.

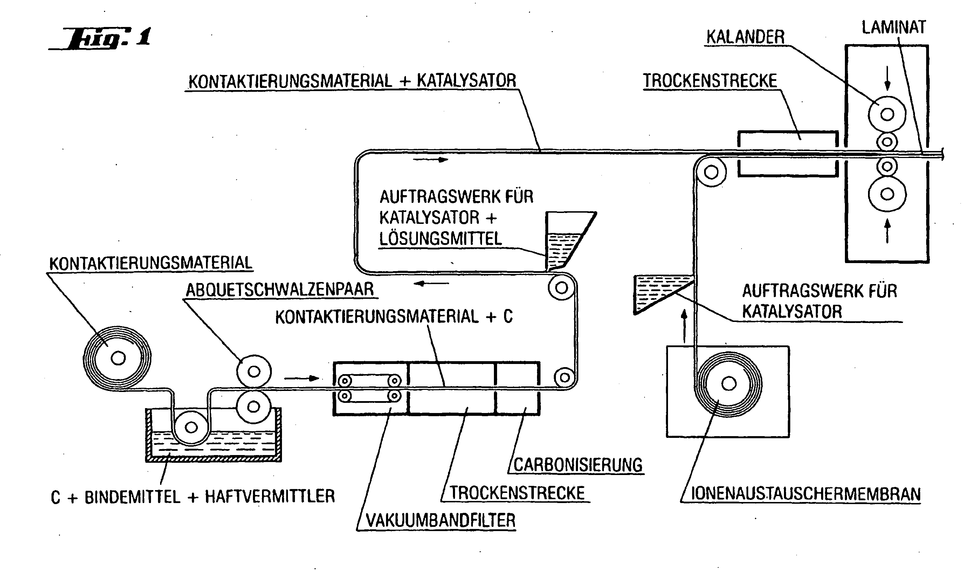

Mittels Transport- und Zuführeinrichtung wird die ionenleitfähige Membran kontinuierlich mit mindestens dem elektronenleitenden Kontaktierungsmaterial, wobei die Membran und/oder das Kontaktierungsmaterial mit einem Katalysator beschichtet sind, positionsgenau zusammengeführt und mindestens diese beiden Komponenten auf einer Walzenanordnung durch Zusammendrücken miteinander laminiert und verbunden (Abb. 1).

Als elektronenleitende Kontaktierungsmaterialien kommen z.B. alle Kohlenstoff-Faserflächengebilde in Frage, die über eine elektrische Leitfähigkeit, vorzugsweise über eine elektrische Leitfähigkeit > 0,01 Ωm, verfügen und eine Porosität innerhalb ihrer Struktur aufweisen, die einen ausreichenden Gasdiffusionsprozeß zuläßt.

Neben Materialverbunden, die Kohlenstoff in der leitfähigen Modifikation enthalten, können aber auch Metalle, insbesondere Edelstahl, Nickel und Titan, bevorzugt als Pulver, Granulat, Papiere, Fasern, Filze, Vliese, Gewebe, Sinterplatten oder Kombinationen der selben, insbesondere Netzflächengebilde aus Metall oder Metalloxiden ausreichender Leitfähigkeit zum Einsatz kommen.

Insbesondere bevorzugt werden hierbei Gebilde, die abhängig von dem verwendeten Metall oder Metalloxid eine Dicke im Bereich von 0,01 bis 1 mm, vorzugsweise von 0,025 bis 0,25 mm und eine Maschenweite im Bereich von 0,001 bis 5 mm, bevorzugt 0,003 bis 0,5 mm, aufweisen. Bei Kohlenstoffgebilden sind Dicken im Bereich von 0,05 bis 5mm bevorzugt, insbesondere von 0,1 bis 2mm. Das Flächengewicht der Kohlenstoffgebilde liegt hierbei im Bereich von 5 bis 500 g/m², insbesondere im Bereich von 20 bis 150 g/m², die Porosität im Bereich von 10 bis 90%, vorzugsweise 50 bis 80%.

In einer bevorzugten Ausführungsform der Erfindung werden graphitierte Kohlenstoffaserflächengebilde eingesetzt. Insbesondere werden folgende Kontaktierungsmaterialien verwendet:
Kohlenstoff-Faser-Papiere (z.B. ^{R}SIGRATHERM PE 204, PE 704, PE 715), Kohlenstoff-Faser- Gewebe (z.B. ^{R}SIGRATEX SPG 8505 und KDL 8023, KDL 8048), Kohlenstoff-Faser-Filze (z.B. ^{R}SIGRATHERM KFA 5 und GFA 5), Kohlenstoff-Faser-Vliese (z.B. ^{R}SIGRATEX SPC 7011 und SPC 7010 oder TGP-H-120 (Toray)) sowie Kohlenstoff-Faserverbundstrukturen (z.B. ^{R}SIGRABOND 1001 und 1501 und 3001).

In einer weiteren Ausgestaltung der Erfindung können die Fasern und Kontaktpunkte der Fasern zur Erhöhung der Leitfähigkeit des Kohlenstoffaserflächengebildes zusätzlich mit einer Schicht aus Kohlenstoff überzogen werden.

Eine Variante zur Herstellung eines solchen Faserflächengebildes besteht im Einsatz von Polyacrylnitrilgeweben und -vliesen, die über einen speziellen Direktoxidationsprozess direkt in die carbonisierte /graphitierte Form übergeführt worden sind , so daß der kostenaufwendige Umweg über den Herstellungsprozess von Einzelfilamenten und der anschliessenden Weiterverarbeitung zu Faserflächengebilden umgangen werden kann (Deutsche Patentanmeldung P 195 17 911.0).

Als Materialien für die ionenleitfähige Membran sind allgemein Materialien von besonderem Interesse, die in einem Teil ihrer Struktur Eigenschaften des festen und in einem anderen solche des flüssigen Zustandes aufweisen, somit sehr formstabil sind aber auch Protonen sehr gut leiten. Dafür in Frage kommende Polymere sind solche, die einen in Ionen dissoziierbaren Rest aufweisen. Vorzugsweise werden kationenleitfähige Membranen verwendet. Die lonenleitfähigkeit für Protonen beträgt vorzugsweise 0,5 bis 200 mS/cm, insbesondere 5 bis 50 mS/cm. Die Membrandicke liegt vorzugsweise im Bereich von 0,1 µm bis 10 mm, insbesondere von 3 µm bis 1 mm. Weiterhin muß bei der Verarbeitung der Polymere zur Membran gewährleistet sein, daß diese gasdicht ist.

Als Basismaterialien für die ionenleitfähige Membran kommen Homo- und Copolymere oder Gemische hiervon zum Einsatz, die mit geeigneten Flüssigkeiten als viskose Lösungen oder Dispersionen erhalten werden können und sich zu Membranen verarbeiten lassen. Wenn Gemische eingesetzt werden, so muß mindestens eine Komponente der Mischung ionenleitfähig sein, während andere Komponenten der Mischung durchaus Isolatoren für die lonenleitfähigkeit sein können, die auf der anderen Seite aber der Membran beispielsweise bestimmte mechanische Eigenschaften oder Hydrophobie verleihen.

Insbesondere kommen Polymere in Frage, die eine gute mechanische Stabilität, eine hohe Temperaturbeständigkeit und eine ausreichende Chemikalienresistenz für die Verwendung als Membranmaterial in elektrochemischen Zellen aufweisen.

Erfindungsgemäß verwendbare Polymere werden beispielsweise in DE-C-42 41 150, US-A-4 927 909, US-A-5 264 542, DE-A- 42 19 077, EP-A- 0 574 791, DE-A-42 42 692; DE-A-19 50 027 und DE-A-19 50 026 und in DE-A-19 52 7435 beschrieben. Auf diese Schriften wird hiermit ausdrücklich Bezug genommen.

Bevorzugt werden als ionenleitfähige Materialien für die erfindungsgemäß einsetzbare Membran Polymere mit dissoziierbaren Gruppen verwendet. Die dissoziierbaren Gruppen können entweder kovalent gebundene funktionelle Gruppen sein (z.B. -SO₃M, -PO₃MM', COOM u.a. (M,M' = H, NH₄, Metalle)) oder Säuren die als Quellungsmittel im Polymer vorliegen (z.B. H₃PO₄ oder H₂SO₄).
Bevorzugt sind Polyarylene mit kovalent gebundenen, dissoziierbaren Gruppen, fluorierte Polymere mit kovalent gebundenen , dissoziierbaren Gruppen oder basische, säuregequollene Polymere mit Arylringen. Besonders bevorzugte Polyarylene weisen als Hauptkette ein Polyaryletherketon, ein Polyarylethersulfon, ein Polyarylsulfon, ein Polyarylsulfid, ein Polyphenylen, ein Polyarylamid oder ein Polyarylester auf. Ebenfalls besonders bevorzugt sind Polybenzimidazole (PBI), die dissoziierbare saure Gruppen enthalten (z.B. PBI gequollen mit H₃PO₄). Ebenfalls geeignet sind Mischungen, die mindestens eines der oben genannten Polymere enthalten.

In einer weiteren bevorzugten Ausführungsform können auch vollständig fluorierte Polymere, d.h. solche in denen an Stelle von C-H-Bindungen C-F-Bindungen enthalten sind, enthalten sein. Diese sind gegen Oxidation und Reduktion sehr stabil und teilweise mit Polytetrafluorethylen verwandt. Insbesondere bevorzugt ist es, wenn solche fluorierten Polymere zusätzlich zu den wasserabweisenden (hydrophoben) Fluorgruppen noch wasseranziehende (hydrophile) Sulfonsäure-Gruppen (SO₃H) enthalten. Diese Eigenschaften treffen beispielsweise auf die unter der Marke ^{R}Nafion bekannten Polymere zu.

Derartige Polymere sind in ihrem gequollenen Zustand (durch die Wasseraufnahme bedingt) einerseits durch ihr hydrophobes, feststoffartiges Gerüst verhältnismäßig formstabil und andererseits in ihren hydrophilen, flüssigkeitsähnlichen Bereichen sehr gut protonenleitend.

Katalysatoren, die zur Herstellung von Membranelektrodeneinheiten nach dem erfindungsgemäßen Verfahren verwendet werden können, sind allgemein alle elektrochemischen Katalysatoren, die Redoxreaktionen 2 H₂/4 H⁺ und O₂/2 O²⁻ katalysieren. Diesen Substanzen liegen meistens Elemente der 8. Nebengruppe des Periodensystems zugrunde, wobei zusätzlich auch Substanzen enthalten sein können, denen Elemente aus anderen Gruppen des Periodensystems zugrunde liegen. Ferner Anwendung finden solche Metalle oder deren Verbindungen, die bei niedrigen Temperaturen die Umsetzung von Methanol und Wasser zu Kohlendioxid und Wasserstoff katalysieren. Insbesondere finden Metalle, Oxide, Legierungen oder Mischoxide dieser Elemente Verwendung als Katalysatoren.

Das als Elektrode dienende gasdurchlässige, elektrisch leitfähige Gebilde kann durch Beschichtung mit dem Katalysator in die wirksame Form übergeführt werden, die den elektrischen Kontakt gewährleistet.
Allgemein kann nach dem erfindungsgemäßen Verfahren sowohl die ionenleitfähige Membran als auch das elektronenleitende Kontaktierungsmaterial oder beide mit dem Katalysator beschichtet werden.

Die Katalysatorkonzentration auf der ionenleitfähigen Membran bzw. auf dem Kontaktmaterial liegt üblicherweise im Bereich von 0,001 bis 4,0 mg/cm², wobei die Obergrenze der Katalysatorkonzentration durch den Katalysatorpreis und die Untergrenze durch die katalytische Aktivität bedingt sind.
Die Aufbringung und Anbindung des Katalysators erfolgt nach den bekannten Verfahren.

So ist es z.B. möglich das Kontaktierungsmaterial mit einer Katalysatorsuspension, enthaltend den Katalysator und eine Lösung des Kationenaustauscherpolymers, zu beschichten. Als Kationenaustauscherpolymere kommen allgemein alle oben genannten ionenleitfähigen Polymere in Frage.

Vorzugsweise werden Metalle oder Legierungen von Metallen ausgewählt aus der 1., 2. und 8. Nebengruppe des Periodischen Systems sowie Sn, Re, Ti, W und Mo als katalytisch aktive Materialien eingesetzt, insbesondere Pt, Ir, Cu, Ag, Au, Ru, Ni, Zn, Rh, Sn, Re, Ti, W und Mo. Weitere Beispiele für erfindungsgemäß verwendbare Katalysatoren sind Platin-, Gold-, Rhodium-, Iridium- und Rutheniumkatalysatoren aufgebracht auf Trägermaterialien, z.B. ^{R}XC-72 und ^{R}XC-72R der Firma E-TEK.

Der Katalysator kann über eine chemische Reaktion auf dem zu beschichtenden Material abgeschieden werden(DE-A-4 437 492.5). So ist es z.B. möglich die Membran und/oder das Kontaktierungsmaterial mit Hexachloroplatinsäure zu imprägnieren und unter Anwendung eines Reduktionsmittels, z.B. Hydrazin oder Wasserstoff, elementares Platin abzuscheiden (JP 80/38934). Platin kann aus einer wässrigen Lösung, die vorzugsweise (Pt(NH₃)Cl₂) enthält, aufgebracht werden (US-A-5 284 571).

Weitere Möglichkeiten zur Katalysatoranbindung sind beispielsweise das Sputtern, das CVD-Verfahren (Chemical Vapor Deposition), die kalte Plasmaabscheidung, das Physical Vapor Deposition (PVD) Verfahren, das Elektronenstrahlverdampfen sowie die elektrochemische Abscheidung auf dem zu beschichtenden Material. Darüber hinaus kann eine Edelmetall-Aktivierung über lonenaustausch an oxidativ modifizierten Rußen und anschließender Reduktion erfolgen.

Als besonders zweckmäßig hat sich bei dem erfindungsgemäßen Verfahren die Beschichtung des Faserflächengebildes mit einer Katalysator-Suspension erwiesen, die bereits den Katalysator als solches, z.B. metallisches Platin, enthält. Insbesondere im Hinblick auf eine gleichmäßige Verteilung der Katalysatorkomponente und die spätere Anbindung der Elektrodenstruktur an die Kationenaustauschermembran ergeben sich erhebliche Vorteile.

Zum Beispiel eignet sich zum Aufbringen der aktiv wirksamen Katalysator-Suspension eine Rakelanordnung in Kombination mit einer Heißwalze (Abb. 1) bzw. eine Auftragsvorrichtung wie sie von der kontinuierlichen Prepregfertigung bekannt ist.

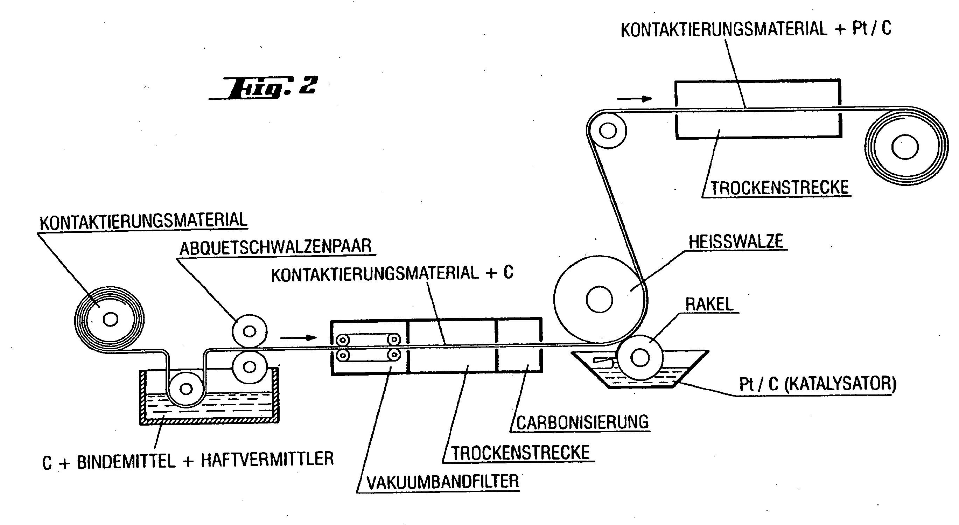

Das so imprägnierte Fasergebilde, die sogenannte Gasdiffussionselektrode kann anschließend aufgewickelt bzw. direkt dem kontinuierlichen Membranelektrodeneinheit (MEA)-Fertigungsprozeß in Bandform zugeführt werden (Abb.2).

Sowohl die Oberflächenbeschaffenheit des ionenleitfähigen Materials als auch die Fixierung der Katalysator-Suspension kann durch ein vorgeschaltetes Tauchbad beeinflußt werden. Durch die Auswahl geeigneter Haftvermittler und Binder sowie Füllstoffe kann einmal das offene Porenvolumen des Faserflächengebildes und die Anbindung an die Phasengrenzefläche und zum anderen die Klebekraft für die Anbindung der Katalysator-Suspension eingestellt werden (Abb. 1 und Abb. 2). Bei diesem Vorgang findet zweckmäßigerweise eine Anordnung aus einem Vakuumbandfilter mit nachgeschalteter regelbarer Trockenstrecke Anwendung.

Die aufgebrachte Katalysator-Suspension kann anschließend in Ihrer Konsistenz/Trocknungsgrad so eingestellt werden, daß eine sich anschließende Laminierung optimal durchgeführt werden kann.

Sollte die Gasdiffusionselektrode vor ihrer Weiterverarbeitung erst aufgerollt werden, so kann durch die Wahl eines geeigneten Trennpapiers, das mit aufgewikkelt wird, eine Verklebung der Elektrode mit sich selbst verhindert werden.

Das elektronenleitende Kontaktierungsmaterial wird nun mit der ionenleitfähigen Membran kontinuierlich und positionsgenau zusammengeführt und die ionenleitfähige Membran auf mindestens einer ihrer Flachseiten auf einer Walzenanordnung mit dem Kontaktierungsmaterial laminiert und verbunden.

In einer erfindungsgemäßen Variante kann das Kontaktierungsmaterial, wenn es auf die beiden Flachseiten der ionenleitfähigen Membran laminiert wird, für jede Seite der Membran einen unterschiedlichen Katalysator enthalten.
Ferner können als Ausgangsmaterialien neben der ionenleitfähigen Membran zwei, gegebenfalis aus unterschiedlichen Materialien bestehende Kontaktierungsmaterialien verwendet werden.

In einer alternativen Ausführungsform kann das elektronenleitende Kontaktierungsmaterial zunächst jeweils einseitig mit der ionenleitfähigen Membran kontinuierlich beschichtet und laminiert werden, wobei dann diese beiden beschichteten Halbkomponenten (Halbmembranelektrodeneinheiten) nach einem Benetzen bzw. Anlösen der ionenleitenden Oberfläche durch Zusammenpressen zu einer Membranelektrodeneinheit zusammengefügt und laminiert werden. Auch bei dieser Variante können entweder Halbmembranelektrodeneinheiten bestehend aus Komponenten gleichen Materials, d.h. gleiches elektronenleitendes Kontaktierungsmaterial und ionenleitfähige Membran bestehend aus dem gleichen Polymer, oder Halbmembranelektrodeneinheiten unterschiedlichen Aufbaus, d.h. unterschiedliche ionenleitfähige Membran und/oder unterschiedliches Kontaktierungsmaterial und/oder unterschiedlicher Katalysator, verwendet werden.

Um die Haftung zwischen der Membran und dem Kontaktierungsmaterial zu verbessern, kann die Membran vor dem Laminierprozeß gegebenenfalls entweder durch Quellen in einem Nichtlösemittel, z.B. Wasser, Aceton, Methanol oder einem anderen aliphatischen Alkohol, oder durch Quellung in Mischungen aus einem Lösemittel, vorzugsweise einem überwiegend polar-aprotischen Lösemittel, z.B. N-Methylpyrrolidon(NMP), Dimethylsulfoxid (DMSO), Dimethylformamid, g-Butyrolacton oder protische Lösemittel wie z.B. Schwefelsäure oder Phosphorsäure oder einem Nicht-Lösemittel zumindest teilweise plastifiziert werden.

Ferner können zur Verbesserung der Haftung und zum Verbinden der Komponenten das Kontaktierungsmaterial oder mindestens eine Flachseite der Membran oder beide Komponenten durch ein Lösemittel oder durch eine Polymerlösung angelöst, benetzt oder angequollen werden und die Komponenten dann, d.h. eine oder beide Flachseiten der ionenleitfähigen Membran und mindestens ein elektronenleitendes Kontaktierungsmaterial, durch Zusammenpressen zusammengefügt und durch Laminieren verbunden werden.

Die Beschichtung der Komponenten kann entweder mit reinem Lösemittel oder mit einer Polymerlösung erfolgen, wobei die Polymerkonzentration 0 bis 100 Gew.%, vorzugsweise 5 bis 50 Gew.% betragen kann. Polymere, die für die Herstellung der Beschichtungslösungen in Frage kommen sind die vorstehend genannten ionenleitfähigen Polymere. Vorzugsweise wird zur Beschichtung eine Polymerlösung des die ionenleitfähige Membran bildenden Polymers verwendet.
Die Beschichtung wird insbesondere in einer Schichtdicke von 1 bis 200 µm, insbesondere 5 bis 100 µm aufgetragen.
Hierbei kann entweder das Kontaktierungsmaterial oder mindestens eine der Flachseiten der ionenleitfähigen Membran mit einer katalytisch wirkenden Substanz beschichtet sein. In einer weiteren erfindungsgemäßen Variante kann der Katalysator in dem die Haftung vermittelnden Beschichtungsmaterial, d.h. in dem Lösemittel bzw. in der aufzubringenden Polymerlösung, enthalten sein.

Die Beschichtung oder sogenannte Konditionierung der ionenleitfähigen Membran erfolgt, sofern es sich um eine einseitige Aufbringung von Lösemittel oder Polymerlösung handelt, über eine Schlitzdüse. Als Schlitzdüsen eignen sich erfindungsgemäß Düsen die eine Breite im Bereich von 0,1 bis 5m und eine Schlitzweite im Bereich von 10 bis 1000µm aufweisen.

Die Membran wird zur Beschichtung entweder in horizontaler Richtung (über oder unter der Düse) oder in vertikaler Richtung (aufsteigend oder absteigend) an der Schlitzdüse vorbeigeführt.
Bei einer beidseitigen Konditionierung der Membran kann die Aufbringung des Lösemittels oder der Polymerlösung entsprechend über eine Durchführung der Membran mittels zweier Schlitzdüsen oder durch Konditionierung der Membran in einem Tauchbad enthaltend die zu beschichtende Lösung erfolgen.

Alternativ kann die Membran beschichtet werden, indem sie an einer Rakel vorbeigeführt wird. Die Breite der Rakel liegt vorzugsweise im Bereich von 0,1 bis 5m bei einer Schlitzweite im Bereich von 5 bis 500 µm. Die Bandgeschwindigkeit liegt hierbei insbesondere zwischen 0,5 mm/s bis 10 m/s, vorzugsweise 5 mm/s bis 1 m/s.

Zur Laminierung werden die Komponenten, d.h. mindestens ein elektronenleitendes Kontaktierungsmaterial und mindestens eine ionenleitfähige Membran, mittels Zuführ- und Positioniervorrichtungen zusammengeführt und zwischen Walzenpaaren miteinander laminiert, wobei die Temperatur im Bereich von 25 bis 200°C liegt und der Walzen-Anpreßdruck im Bereich von 10⁷ bis 10¹² Pa, insbesondere 10⁸ bis 10¹⁰ Pa, liegt. Dabei ist zu beachten, daß der Anpreßdruck bei der Verwendung von Walzen oft stark von der Walzenform und -größe abhängig ist.
Durch diesen Laminierprozeß wird die Elektrodenstruktur direkt in die oberste angelöste oder angeschmolzene Schicht der ionenleitenden Membran eingepreßt.

Der Durchmesser der erfindungsgemäß verwendeten Walzenpaare liegt vorzugsweise im Bereich von 0,1 bis 2m.

In einer besonderen Ausführungsform kann die ionenleitfähige Membran mit einem Kontaktierungsmaterial, welches bereits in dem späteren Verwendungszweck angepaßte gebrauchsfertige Einheiten geschnitten ist, z.B. als Kohlenstoff-Vlies-Stücke vorliegt, die in ihrer Form und Größe den in einer Brennstoffzelle verwendeten Kohlenstoff-Vliesen entsprechen, laminiert werden. Erfindungsgemäß können die Einheiten so abgerollt werden, daß der Abstand zwischen den Einheiten der doppelten Breite des in einer Brennstoffzelle erforderlichen unbeschichteten Membranrandes, vorzugsweise 0,1 bis 100 mm, insbesondere 1 bis 50 mm, entspricht. Der Vorteil dieser erfindungsgemäßen Verfahrensvariante liegt vor allem in einer Ersparnis von Verfahrensschritten bei der darauffolgenden Weiterverarbeitung der erhaltenen Membranelektroden-Einheiten zu Brennstoffzellen.

Die nach dem erfindungsgemäßen kontinuierlichen Verfahren erhaltenen Membran-Elektroden-Einheiten aus elektronenleitendem Kontaktierungsmaterial, Katalysator und ionenleitfähiger polymer Membran werden in einer der Laminierung nachgeschalteten und mit dieser gekoppelten kontinuierlichen Stufe von noch anhaftenden überflüssigen Bestandteilen befreit.

Eine Möglichkeit zu einer solchen Konditionierung besteht beispielsweise darin, daß die Membran-Elektroden-Einheit in Bandform durch eine auf 10 bis 250°C, insbesondere 20 bis 200 °C, beheizte Trockenstrecke, beispielsweise einen Umluftofen geführt wird. Auf diese Weise werden noch anhaftende Lösemittelreste oder Wasser verdunstet. In einer besonderen Ausführungsform kann in der Trockenstrecke längs zur Bewegungsrichtung ein Temperaturgradient vorliegen.

Eine weitere Möglichkeit zur Entfernung der flüchtigen Bestanateile besteht in der Trocknung des Laminats mit Hilfe von Infrarotstrahlen, insbesondere in Kombination mit einem nachgeschalteten Umlufttrockner.

In einer weiteren Verfahrensvariante kann die Entfernung der überflüssigen, noch anhaftenden Bestandteile in einem nachgeschalteten Waschschritt erfolgen. So können z.B. noch anhaftende Lösemittel bzw. Nicht-Lösemittel oder Polymerbestandteile durch eine Flüssigkeit extrahiert werden, die die membranbildenden Polymere nicht löst. Verwendung finden hier beispielsweise Wasser/NMP-Mischungen sowie Mischungen aus NMP und niederen aliphatischen Alkoholen. Der NMP-Anteil liegt hierbei vorzugsweise unter 25%. Insbesondere erfolgt die Extraktion bei dieser Variante durch Besprühen der Membran-Elektroden-Einheit mit der Flüssigkeit oder durch Durchleiten des Laminatbandes mit Hilfe von Umlenkrollen durch ein entsprechendes Tauchbad. Nach Abtropfen des Extraktes wird die Membran-Elektroden-Einheit einem anschließenden Trocknungsprozeß unterworfen. Das Trocknen der Membran-Elektroden-Einheit kann wie vorstehend beschrieben durchgeführt werden.

Um die mit dem erfindungsgemäßen Verfahren erhaltene Membran-Elektroden-Einheit bereits in eine für den Einbau in eine Brennstoffzelle geeignete Form zu bringen, kann als weiterer Verfahrensschritt der Stufe der Konditionierung eine sogenannte Konfektionierung nachgeschaltet sein.

Hierbei kann die als Band vorliegende Membran-Elektroden-Einheit mit Hilfe von entsprechenden Schneid- oder Stanzmaschinen in regelmäßigen, den weiteren Verwendungszweck angepaßten, entsprechenden Abständen zerteilt werden. Sofern bei der Herstellung des Membran-Elektroden-Einheits bereits als Kontaktierungsmaterial Kohlenstoffvlies-Stücke verwendet wurden, so wird das Membran-Elektroden-Einheitband in den nicht-beschichteten Bereichen zugeschnitten, so daß die so erhaltenen Membran-Elektroden-Einheit stücke nur im mitteleren Bereich, nicht aber am Rand beschichtet sind.

Weiterhin ist es möglich in einem nachgeschalteten, gekoppelten Schritt selbsthärtende Dichtungsmaterialien auf die äußere, nicht beschichtete oder auf die beschichtete Randzone der Membran-Elektroden-Einheit aufzutragen, so daß das Kontaktierungsmaterial nicht mehr gasdurchlässig ist (US-A-5 264 299). Insbesondere kommen hier als Dichtungsmaterialien härtbare Siliconharze zur Anwendung, welche in flüssiger Form aufgetragen werden und selbst aushärten. Das so aufgetragene Dichtungsmaterial dient beim nachfolgenden Einbau der Membranelektrodeneinheit in eine Brennstoffzelle zur seitlichen Abdichtung der Zelle und zur Verhinderung des Austretens von Fluiden und des Ausströmens von Brenn- oder Oxidationsgasen.

Durch die Ermittlung der Wechselstromwiderstände kann eine Aussage über die Reproduzierbarkeit der Herstellung der Membran-Elektroden-Einheit getroffen werden. Bei Membran-Elektroden-Einheit aus einer Serie korreliert der Widerstand auch mit der Leistung, nicht jedoch zwischen verschiedenen Membran-Elektroden-Einheit. Membran-Elektroden-Einheit, die mit den bekannten diskontinuierlichen Verfahren hergestellt werden weisen Wechselstromwiderstände, die zwischen 10 mΩ und 10 Ω schwanken auf. Die so erhaltenen Produkte enthalten oft Verwerfungen, Lufteinschlüsse oder ähnliche Fehlstellen.
Das erfindungsgemäße kontinuierliche Verfahren führt dagegen zu einer einheitlichen Anbindung der Elektrodenstruktur an die ionenleitfähige Membran und regelmäßig zu Membran-Elektroden-Einheit mit einer Schwankungsbreite von ± 10%, insbesondere ± 5% (gemessen im betriebsbereiten Zustand). Die Widerstände, der mit dem erfindungsgemäßen Verfahren erhaltenen Membran-Elektroden-Einheiten liegen üblicherweise im Bereich von 0,02 bis 0,6 Ω, insbesondere im Bereich von 0,04 bis 0,45 Ω.
Mit dem erfindungsgemäßen Verfahren können Membranelektrodeneinheiten in einfacher, wirtschaftlicher und gut reproduzierbaren Weise hergestellt werden. Sie eignen sich daher und aufgrund ihrer niedrigen Wechselstromwiderstände für den Einbau in Brennstoffzellen.

Die Erfindung wird nachstehend anhand der Ausführungsbeispiele und der anhängenden Figuren näher erläutert.

### Beispiele

### Beispiel 1

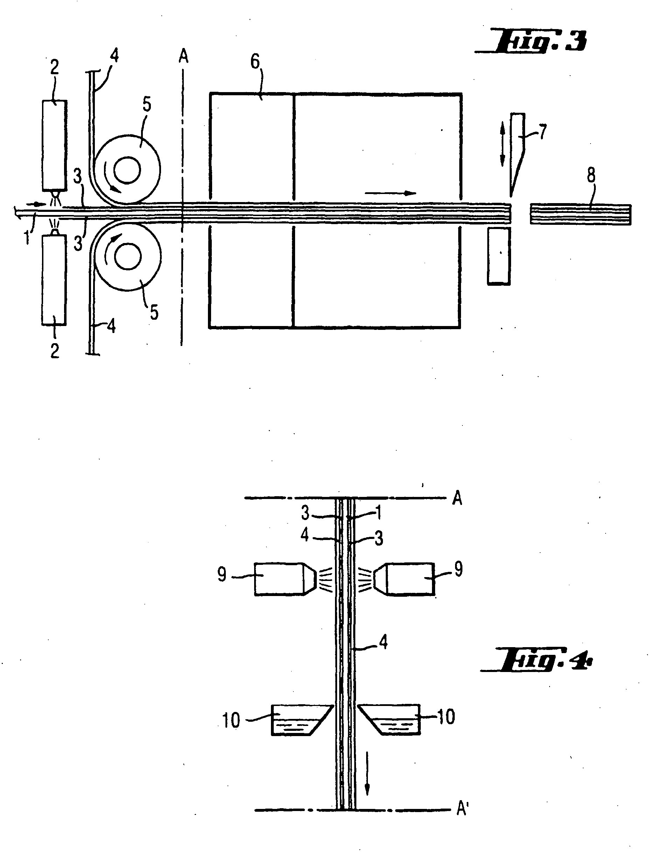

Membranmaterial (Abb. 3, 1): Sulfoniertes Polyaryletherketon gemäß Formel (1), hergestellt gemäß EP 0 574 791, lonenaustauscheräquivalent 1.4 mmol/g, Dicke 100µm, Rollenform, Breite 400 mm.

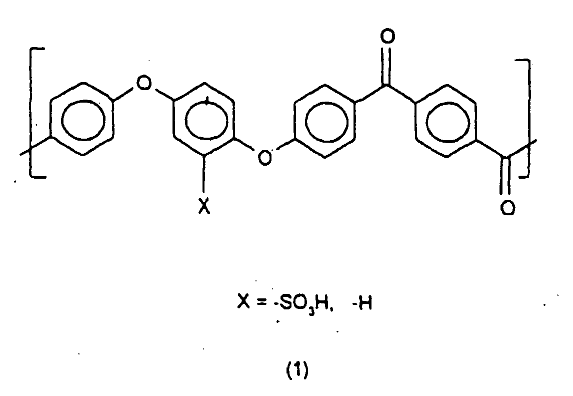

Beschichtungsmaterial (Abb. 3, 3) : Mischung bestehend aus
15 g sulfoniertem Polymer, das mit dem Membranmaterial identisch ist,
15 g Platin-Katalysator (30% Pt/Vulcan XC-72, Fa. E-TEK, Inc. Natick, USA),
70 g N-Methylpyrrolidon.
Kohlenstoff-Gewebe (Abb. 3, 4): VP 676, Fa. SGL CARBON GmbH, Wiesbaden, Deutschland.
Die Membran (1) wird mit einer Geschwindigkeit von 5 mm/s zwischen zwei Schlitzdüsen (2) (Breite der Düse 370 mm, Schlitzbreite 500 µm) durchgeführt; dabei wird auf beiden Seiten der Membran eine Beschichtung (3) von 100 µm Dicke aufgebracht.
Hinter den Schlitzdüsen wird über zwei Walzen (5) (Breite 450 mm, Durchmesser 200 mm) beidseitig Kohlenstoff-Gewebe (4) eingeschossen, so daß ein Laminat entsteht. Die obere Walze übt auf das darunter laufende Laminat eine Kraft von 1000 N aus. Das als Band vorliegende Laminat wird durch einen Zweikammer-Ofen (6) (Länge 3 m) geführt, in dem das NMP aus dem Beschichtungsmaterial (3) entfernt wird. Die erste Kammer (Länge 1 m) ist auf 120°C temperiert, die zweite Kammer (Länge 2 m) auf 80°C. Hinter dem Ofen wird das Laminat mit einer kontinuierlich arbeitenden Schlagschere (7) in Stücke (8) zerteilt; die Breite der Stücke ist durch die Breite des Laminatbandes gegeben, die Länge der Stücke beträgt 500 mm. Das so erhaltene Laminat kann als Membran/ Elektroden-Einheit in eine Membran- Brennstoffzelle eingebaut werden und liefert dort im Wasserstoff/Sauerstoff-Betrieb (jeweils 2 bar und 80°C) eine maximale elektrische Leistung von 3.1 kW/m².

### Beispiel 2

Variante zu Beispiel 1. Nach dem Aufwalzen des Kohlenstoff-Gewebes (Abb.3) wird an der mit A gekennzeichneten Stelle das Laminat über eine Umlenkrolle (Durchmesser 1 m) in die in Abb. 4 skizzierte Apparatur eingeführt. Über zwei Düsenköpfe (9) wird beidseitig Wasser (25 ml/s) auf die Membran aufgesprüht, mit dem NMP aus der Beschichtung extrahiert wird. 0.5 m unterhalb der Düsenköpfe befinden sich zu beiden Seiten des Laminatbandes Ablauftröge (10) für das aufgesprühte Wasser. Über eine Umlenkrolle wird das Laminat anschließend in den Ofen (6) (beide Kammern 80°C; hinter dem Ofen befinden sich zusätzlich je zwei handelsübliche 150 W-IR-Lampen 100 mm über und unter dem Laminat) geführt und wie in Beispiel 1 weiter behandelt. Das so erhaltene Laminat kann als Membran/Elektroden-Einheit in eine Membran- Brennstoffzelle eingebaut werden und liefert dort im Wasserstoff/Sauerstoff-Betrieb (jeweils 2 bar, 80°C) eine maximale elektrische Leistung von 3.8 kW/m².

### Beispiel 3

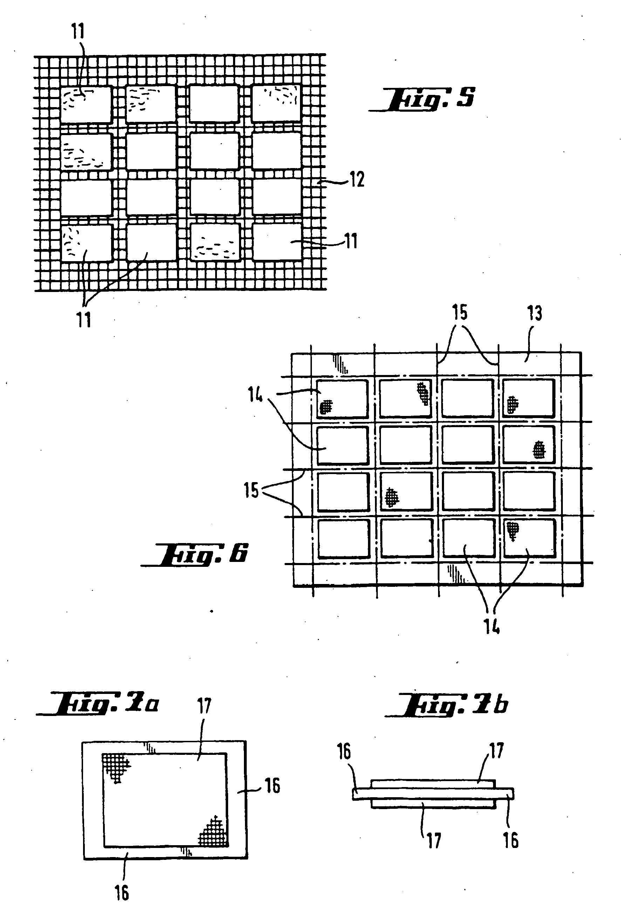

Für die folgende Ausführung wird ein Laminat aus einem handelsüblichen Kohlenstoff-Vlies (TGP-H-120, Fa. Toray, Tokio, Japan), das durch Sputtern mit 40 g/m² Platin beschichtet ist, und einem handelsüblichen Polyethylennetz verwendet. Das Kohlenstoff-Vlies wird in einzelnen Stücken (11) (80 mm x 120 mm) auf das Netz (12) aufgepreßt, so daß die in Abb.5 skizzierte Aufteilung zustande kommt, in der die Kohlenstoff-Vlies Stücke durch Zwischenräume voneinander getrennt sind. Die mit Platin besputterte Seite ist von der mit dem Polyethylen-Netz laminierten Seite abgewandt.

Das Laminat wird anstelle des Kohlenstoff-Gewebes in Beispiel 2 verwendet. Im Gegensatz zu Beispiel 2 enthält die Beschichtungslösung jedoch keinen Katalysator. Das Laminat wird über die Kohlenstoff-Vlies-Seite mit der Membran kontaktiert. Das resultierende Laminat besteht aus einer Membran (13), die beidseitig mit isolierten Kohlenstoff-Gewebe-Stücken (14) versehen ist (Abb.6). Mit einer Kombination aus kontinuierlich arbeitenden Scheren (handelsübliche Perforationswerkzeuge) wird dieses Laminat entlang der Linien (15) geschnitten. Es entstehen Laminatstücke (Abb. 7), deren Rand (16) nur aus einer freistehenden Membran besteht und die innerhalb des Randes mit Katalysator-haltigem Kohlenstoff-Gewebe (17) beschichtet sind. Diese Stücke sind besonders als Membran/Elektroden-Einheiten zur Stapelung in Membran-Brennstoffzellen geeignet, weil der freistehende und glatte Rand sich - ggf. unter Verwendung von konventionellen, elastischen Dichtungen - gasdicht verschließen läßt. Das Laminat wird als Membran/Elektroden-Einheit in eine Membran-Brennstoffzelle eingebaut und liefert dort im Wasserstoff!Sauerstoff-Betrieb (jeweils 2 bar, 80°C) eine maximale elektrische Leistung von 2.9 kW/m²

### Beispiel 4

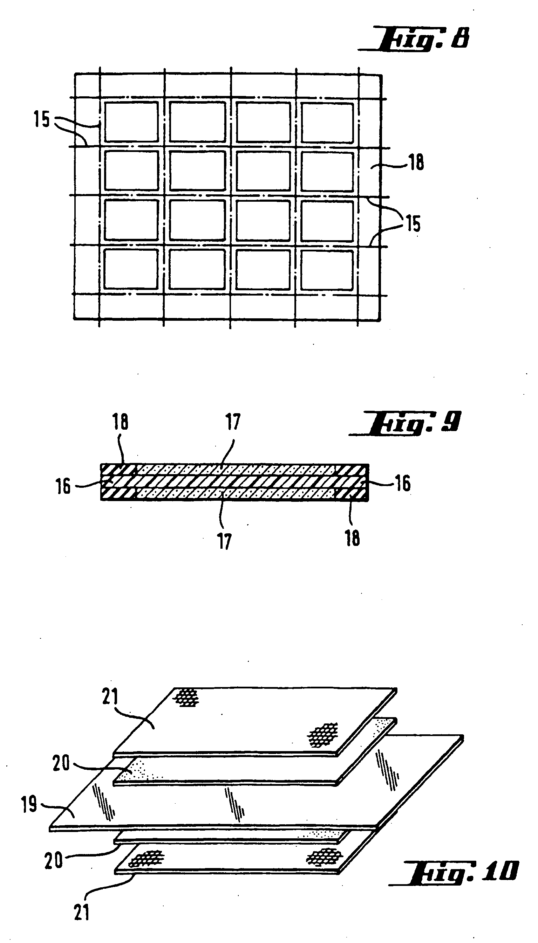

Ein nach Beispiel 1 gewonnenes Laminat wird in einem technisch üblichen, kontinuierlich verlaufenden Tiefdruckverfahren mit einer Silicongummi-Lösung (Sylgard™, DOW) bedruckt. Die Druckanlage ist direkt hinter dem Ofen integriert und erzeugt auf dem Laminat eine Raster (Abb. 8) aus gummierten Bereichen (18), in denen das Kohlenstoff-Gewebe vollständig mit Silicongummi getränkt ist. Mit einer Kombination aus kontinuierlich arbeitenden Scheren (handelsübliche Perforationswerkzeuge) wird dieses Laminat entlang der Linien (19) geschnitten. Auf diese Weise werden Membran/Elektroden-Einheiten mit integrierter, lateraler Gasabdichtung (18) erhalten (Abb. 9).

### Beispiel 5

Vergleichsexperiment zu Beispiel 1. Membranmaterial, Beschichtungsmaterial, Kohlenstoff-Gewebe und Mengenverhältnisse wie Beispiel 1.
Verfahren: Membranmaterial 19 (200 x 200 mm²), Beschichtungsmaterial (20) (180 x 180 mm², mit Kastenrakel aufgetragen) und Kohlenstoff-Gewebe (21) (180 x 180 mm²) werden miteinander wie in Abb. 10 gezeigt verpreßt (p = 10⁹ Pa, t = 30 min, T = 80°C).

Ermittlung des Wechselstromwiderstandes von Laminaten:
Zur Messung wird das Laminat zwischen die beiden Hälften eines Stahlblocks mit einer zylindrischen Ausfräsung deren Durchmesser 40mm beträgt, gespannt. Diese Ausfräsung ist mit Stahlvliesen ausgelegt. Das oberste Stahlvlies ragt 0.2 mm aus der Fräsung heraus. Die Maschenweite des Vlieses beträgt 0,5 mm.
Die Elektroden ragen 5mm über den Rand des Stahlvlieses hinaus. In diesem Fall werden die Verhältnisse der Test-Brennstoffzelle nachgebildet und um die Verhältnisse der Test-Brennstoffzelle anzugleichen die MEA im betriebsbereiten Zustand eingebaut.
Nachdem das Laminat zwischen die Hälften des Stahlblocks eingespannt wurde, werden diese mittels Schrauben mit M12 Gewinde zusammengepreßt. Zur gleichmäßigen Belastung werden zwischen Stahlblock und Muttern Unterlegscheiben als Federn zwischengelegt.
Bevor man die Muttern anzieht, wird zur Messung des Wechselstromwiderstandes eine Rechteckspannung von 1 kHz an das Laminat angelegt. Die Meßspannung (als Vₛₛ) liegt im Bereich kleiner 12 Volt. Zur Messung wird ein Voltcraft LCR Meßgerät Typ 4090 eingesetzt.
Die Muttern werden nun über Kreuz langsam angezogen bis sich keine merkliche Veränderung des Wechselstromwiderstandes mehr ergibt.
Der endgültige Widerstand wird nach einer Angleichphase von 3 min abgelesen. Die Abweichung der Wechselstromwiderstände der erfindungsgemäß hergestellten Membran-Elektroden-Einheit liegt im Bereich von < 10%, insbesondere < 5%.

## Patentansprüche

1. Verfahren zur Herstellung von Membranelektrodeneinheiten,
die mindestens eine mittig angeordnete, ionenleitfähige polymere Membran enthalten, die mindestens über einen maßgeblichen Teil ihrer beiden, sich gegenüberliegenden Flachseiten mit mindestens einer katalytisch wirkenden Substanz und mit mindestens einem flächigen, gasdurchlässigen, elektronenleitenden Kontaktierungsmaterial elektrisch leitend verbunden ist,
und bei denen die Verbindung von mindestens zwei der genannten Komponenten durch Laminieren erfolgt,
**dadurch gekennzeichnet, daß**
ein mit einer katalytisch wirkenden Substanz beschichtetem elektronenleitendem Kontaktierungsmaterial in Bandform und mindestens eine der Flachseiten der ionenleitfähigen Membran
oder
ein elektronenleitendes Kontaktierungsmaterial in Bandform und mindestens eine der Flachseiten der ionenleitfähigen Membran, welche mit einer katalytisch wirkenden Substanz beschichtet ist,
oder
ein mit einer katalytisch wirkenden Substanz beschichtetes elektronenleitendem Kontaktierungsmaterial in Bandform und mindestens eine der Flachseiten der ionenleitfähigen Membran, welche mit einer katalytisch wirkenden Substanz beschichtet ist
kontinuierlich bei einer Temperatur im Bereich von 25 bis 200°C und einem Walzen-Anpreßdruck im Bereich von 10⁷ bis 10¹² Pa laminiert wird.

2. Verfahren nach Anspruch 1, **dadurch gekennzeichnet, daß** die ionenleitfähige Membran mittels Transport- und Zuführeinrichtungen mit mindestens dem elektronenleitenden Kontaktierungsmaterial positionsgenau zusammengeführt wird und mindestens beide Komponenten durch Zusammendrücken miteinander laminiert und verbunden werden.

3. Verfahren nach mindestens einem der Ansprüche 1 und 2, **dadurch gekennzeichnet, daß** als ionenleitfähige Membran eine kationenleitfähige Membran verwendet wird.

4. Verfahren nach mindestens einem der Ansprüche 1 bis 3, **dadurch gekennzeichnet, daß** als ionenleitfähige Membran eine Membran verwendet wird, die ein Polymer aus der Gruppe der Polyaryletherketone, Polyarylensulfide, Polyaryethersulfone, Poly-(1,4-phenylen)e, Polybenzimidazole oder aus der Gruppe der sulfonierten Polyaramide oder ein vollständig fluoriertes Polymer enthält.

5. Verfahren nach mindestens einem der Ansprüche 1 bis 3, **dadurch gekennzeichnet, daß** als Katalysator ein Platin, Gold-, Rhodium-, Iridium oder Rutheniumkatalysator verwendet wird.

6. Verfahren nach mindestens einem der Ansprüche 1 bis 3, **dadurch gekennzeichnet, daß** als elektronenleitendes Kontaktierungsmaterial ein Kohlenstoffaserflächengebilde aus der Gruppe Kohlenstoffpapier, Kohlenstoffvlies, Kohlenstoffgewebe, Kohlenstoffilz oder Kohlenstoff-Faserverbundstrukturen oder Metalle verwendet werden.

7. Verfahren nach Anspruch 6, **dadurch gekennzeichnet, daß** als Kontaktierungsmaterial ein graphitiertes Kohlenstoffaserflächengebilde verwendet wird.

8. Verfahren nach mindestens einem der Ansprüche 6 oder 7, **dadurch gekennzeichnet, daß** als Kontaktierungsmaterial ein Kohlenstoffaserflächengebilde verwendet wird, dessen Fasern und Kontaktpunkte der Fasern zusätzlich mit einer Schicht aus Kohlenstoff überzogen sind.

9. Verfahren nach mindestens einem der Ansprüche 1 bis 8, **dadurch gekennzeichnet, daß** die ionenleitfähige Membran auf mindestens einer ihrer Flachseiten mit einem elektronenleitenden Kontaktierungsmaterial laminiert wird.

10. Verfahren nach Anspruch 9, **dadurch gekennzeichnet, daß** die ionenleitfähige Membran auf jeder ihrer Flachseiten mit einem unterschiedlichen Kontaktierungsmaterial verbunden wird.

11. Verfahren nach mindestens einem der Ansprüche 9 oder 10, **dadurch gekennzeichnet, daß** die ionenleitfähige Membran auf ihren beiden Flachseiten mit einem elektronenleitenden einen Katalysator tragenden Kontaktierungsmaterial laminiert wird, wobei das Kontaktierungsmaterial für die eine Seite der Membran einen anderen Katalysator trägt als das Kontaktierungsmaterial für die andere Seite der Membran.

12. Verfahren nach mindestens einem der Ansprüche 9 oder 10, **dadurch gekennzeichnet, daß** die Membranelektrodeneinheit hergestellt wird, indem zwei aus je einer ionenleitfähigen Membran und einem elektronenleitenden Kontaktierungsmaterial bestehende Laminate durch Laminieren an den ionenleitenden Oberflächen verbunden werden.

13. Verfahren nach mindestens einem der Ansprüche 1 bis 12, **dadurch gekennzeichnet, daß** zum Verbinden der Komponenten das elektronenleitende Kontaktierungsmaterial oder mindestens eine Flachseite der Membran oder beide Komponenten mit einem Lösemittel oder einer Polymerlösung kontinuierlich beschichtet werden.

14. Verfahren nach Anspruch 13, **dadurch gekennzeichnet, daß** der Katalysator in dem die Haftung vermittelnden Beschichtungsmaterial enthalten ist.

15. Verfahren nach mindestens einem der Ansprüche 13 und 14, **dadurch gekennzeichnet, daß** zur Beschichtung eine Polymerlösung verwendet wird, die das ionenleitfähige Polymer, das die Membran bildet, enthält.

16. Verfahren nach mindestens einem der Ansprüche 1 bis 15, **dadurch gekennzeichnet, daß** die zu laminierenden Komponenten mittels Zuführ- und Positioniervorrichtungen in der vorgesehenen Weise zusammengeführt werden.

17. Verfahren nach mindestens einem der Ansprüche 1 bis 16, **dadurch gekennzeichnet, daß** die zu laminierenden Komponenten mittels Zuführ- und Positioniervorrichtungen in der vorgesehenen Weise zusammengeführt und bei einem Druck im Bereich von 10⁸ bis 10¹⁰ Pa laminiert werden.

18. Verfahren nach mindestens einem der Ansprüche 1 bis 17, **dadurch gekennzeichnet, daß** die erhaltenen Laminate in einem der Laminierung nachgeschalteten und mit dieser gekoppelteten kontinuierlichen Stufe von noch anhaftenden, überflüssigen Bestandteilen befreit werden.

19. Verfahren nach Anspruch 18, **dadurch gekennzeichnet, daß** das Laminat durch eine beheizte Trockenstrecke mit einer Temperatur im Bereich von 10 bis 250°C geführt wird.

20. Verfahren nach Anspruch 18, **dadurch gekennzeichnet, daß** die überflüssigen Bestandteile in einem nachgeschalteten Waschschritt entfernt werden und das Laminat danach getrocknet wird.

21. Verfahren nach mindestens einem der Ansprüche 1 bis 20, **dadurch gekennzeichnet, daß in** einem der Laminierung nachgeschalteten, kontinuierlichen Stufe auf die äußeren Randzonen des Laminates, entlang derer bei späterer Verwendung eine Abdichtung gegen Fluide und Gase erforderlich ist, Dichtungsmaterialien aufgetragen werden.

22. Verfahren nach mindestens einem der Ansprüche 1 bis 21, **dadurch gekennzeichnet, daß** das Laminat in einem der Laminierung nachgeschalteten Prozeß in entsprechenden Abständen, die dem weiteren Verwendungszweck angepaßt sind, zerteilt wird.

## Claims

1. A method for producing membrane electrode assemblies
which contain at least one centrally arranged, ion-conductive polymeric membrane which is electrically conductively bonded over at least a substantial part of its two opposing flat faces to at least one catalytically active substance and at least one planar, gas permeable, electron-conductive contact material,
and in which the bond of at least two of said components is achieved by lamination,
**characterized in that**
an electron-conductive contact material in the form of a band and coated with a catalytically active substance and at least one of the flat faces of the ion-conductive membrane
or
an electron-conductive contact material in the form of a band and at least one of the flat faces of the ion-conductive membrane which is coated with a catalytically active substance
or
an electron-conductive contact material in the form of a band and coated with a catalytically active substance and at least one of the flat faces of the ion-conductive membrane which is coated with a catalytically active substance
are continuously laminated at a temperature in the range of from 25 to 200°C and a roller contact pressure in the range of from 10⁷ to 10¹² Pa.

2. The method according to claim 1, **characterized in that** the ion-conductive membrane is brought together with at least the electron-conductive contact material in a precise position by means of transport and supply devices and at least both components are laminated and bonded with each other by compression.

3. The method according to at least one of claims 1 and 2, **characterized in that** a cation-conductive membrane is used as the ion-conductive membrane.

4. The method according to at least one of claims 1 to 3, **characterized in that** a membrane is used as the ion-conductive membrane which contains a polymer from the group of polyaryl ether ketones, polyarylene sulphides, polyaryl ether sulphones, poly-(1,4-phenylenes), polybenzimidazoles or from the group of sulphonated polyaramides or a completely fluorinated polymer.

5. The method according to at least one of claims 1 to 3, **characterized in that** a platinum, gold, rhodium, iridium or ruthenium catalyst is used as the catalyst.

6. The method according to at least one of claims 1 to 3, **characterized in that** a carbon-fibre sheet material from the group of carbon paper, carbon non-woven, carbon fabric, carbon felt or carbon-fibre composites or metals is used as the electron-conductive contact material.

7. The method according to claim 6, **characterized in that** a graphitized carbon-fibre sheet material is used as the contact material.

8. The method according to at least one of claims 6 or 7, **characterized in that** a carbon-fibre sheet material is used as the contact material, the fibres of which and the contact points of the fibres additionally being coated with a layer made of carbon.

9. The method according to at least one of claims 1 to 8, **characterized in that** the ion-conductive membrane is laminated on at least one of its flat faces with an electron-conductive contact material.

10. The method according to claim 9, **characterized in that** the ion-conductive membrane is bonded on each of its flat faces with a different contact material.

11. The method according to at least one of claims 9 or 10, **characterized in that** the ion-conductive membrane is laminated on its two flat faces with an electron-conductive contact material bearing a catalyst, the contact material for one face of the membrane bearing a catalyst different from that of the contact material for the other face of the membrane.

12. The method according to at least one of claims 9 or 10, **characterized in that** the membrane electrode assembly is produced by bonding two laminates each consisting of one ion-conductive membrane and one electron-conductive contact material to the ion-conductive surfaces by lamination.

13. The method according to at least one of claims 1 to 12, **characterized in that** the electron-conductive contact material or at least one flat face of the membrane or both components are continuously coated with a solvent or a polymer solution to bond the components.

14. The method according to claim 13, **characterized in that** the catalyst is contained in the coating material imparting adhesion.

15. The method according to at least one of claims 13 and 14, **characterized in that** a polymer solution containing an ion-conductive polymer which forms the membrane is used for the coating.

16. The method according to at least one of claims 1 to 15, **characterized in that** the components to be laminated are brought together in the intended manner by means of supply and positioning devices.

17. The method according to at least one of claims 1 to 16, **characterized in that** the components to be laminated are brought together in the intended manner by means of supply and positioning devices and are laminated at a pressure in the range of from 10⁸ to 10¹⁰ Pa.

18. The method according to at least one of claims 1 to 17, **characterized in that** the obtained laminates are freed of still adherent, excess components in a continuous step downstream of the lamination and coupled with the latter.

19. The method according to claim 18, **characterized in that** the laminate is led through a heated drying section having a temperature in the range of from 10 to 250°C.

20. The method according to claim 18, **characterized in that** the excess components are removed in a downstream washing step and the laminate is subsequently dried.

21. The method according to at least one of claims 1 to 20, **characterized in that** sealing materials are applied to the outer edge regions of the laminate in a continuous step downstream of the lamination, the outer edge regions requiring a seal against fluids and gases in subsequent use.

22. The method according to at least one of claims 1 to 21, **characterized in that** the laminate is divided into appropriate sections in a procedure downstream of the lamination, the sections being adapted to the further use.

## Revendications

1. Procédé pour la fabrication des unités des électrodes des membranes qui contiennent au moins une membrane polymère conductrice ionique, aménagée au milieu, qui est liée au moins sur une partie déterminante de ses deux surfaces situées l'une en face de l'autre avec au moins une substance catalytiquement active et avec au moins un matériau de contact à conduction électronique conduisant les électrons, plan, perméable aux gaz,
et dans lesquels la liaison d'au moins deux composants cités est effectuée par laminage,
**caractérisé en ce que** un matériau de contact à conduction électronique, pelliculé avec une substance catalytiquement active sous forme de bande et au moins une des surfaces plates de la membrane conduction électrique ou bien un matériau de contact à conduction électronique et pelliculé avec une substance catalytiquement active sous forme de bande et au moins une des faces plates de la membrane conductrice ionique laminée avec une substance catalytiquement active est laminée en façon continuée avec une température dans l'intervalle de 25 jusqu'à 200°C et une pression de laminage dans l'intervalle de 10⁷ jusqu'à 10¹² Pa.

2. Procédé selon revendication 1, **caractérisé en ce que** la membrane conductrice ionique est réunie avec précision dans le positionnement avec au moins le matériau de contact à conduction électronique au moyen des dispositifs de transport et de guidage, et **en ce qu'**au moins les deux composants sont laminés et reliés par colaminage.

3. Procédé selon au moins une des revendications 1 ou 2, **caractérisé en ce que** une membrane à conduction ionique est utilisée comme membrane à conduction de cationique.

4. Procédé selon au moins une des revendications 1 à 3, **caractérisé en ce que** on utilise comme membrane conductrice ionique une membrane qui contient un polymère du groupe des polyaryléthercétones, des polyarylène-sulfures, des polyaryléthersulfones, des poly-(1,4-phénylènes), des polybenzimidazoles ou choisi parmi les polyaramides sulfonés ou un polymère complètement fluoré.

5. Procédé selon au moins une des revendications 1 à 3, **caractérisé en ce** on utilise comme catalyseur un catalyseur de platine, or, rhodium, iridium ou ruthénium.

6. Procédé selon au moins une des revendications 1 à 3, **caractérisé en ce que** on utilise comme matériau de contact à conduction électronique un produit plat en fibres de carbone choisi parmi le papier de carbone, le non tissé de carbone, le tissu de carbone, le feutre de carbone, ou des structures stratifiées de fibres de carbone ou de métaux.

7. Procédé selon revendication 6, **caractérisé en ce qu'**on utilise comme matériau de contact un produit plat de fibres de carbone graphité.

8. Procédé selon au moins une des revendications 6 ou 7, **caractérisé en ce que** on utilise comme matériau de contact un produit plat de fibres de carbone, dont les fibres et les points de contact des fibres sont recouverts en plus avec une couche de carbone.

9. Procédé selon au moins une des revendications 1 à 8, **caractérisé en ce que** la membrane conductrice ionique est laminée sur au moins une de ses surfaces planes avec un matériau de contact à conduction électronique.

10. Procédé selon revendication 9, **caractérisé en ce que** la membrane conductrice ionique est liée sur chacune de des faces planes avec un matériau de contact différent.

11. Procédé selon au moins une des revendications 9 ou 10, **caractérisé en ce que**, la membrane conductrice ionique est laminée sur ses deux faces planes avec un matériau de contact à conduction électronique, supportant un catalyseur, dans lequel le matériau de contact pour une face de la membrane porte un autre catalyseur que le matériau de contact pour l'autre face de la membrane.

12. Procédé selon au moins une des revendications 9 ou 10, **caractérisé en ce que**, l'unité d'électrodes à membrane est fabriquée en liant deux stratifiés constitués respectivement d'une membrane conductrice ionique et d'un matériau de contact à conduction électronique par laminage sur les surfaces ioniquement conductrices.

13. Procédé selon au moins une des revendications 1 à 12, **caractérisé en ce que**, pour lier les composants on recouvre en continu le matériau de contact à conduction électronique ou au moins une face plane de la membrane ou les deux avec un solvant ou une solution de polymère.

14. Procédé selon la revendication 13, **caractérisé en ce que**, le catalyseur est contenu dans le matériau de revêtement promoteur de l'adhérence.

15. Procédé selon au moins une des revendications 13 à 14, **caractérisé en ce que**, on l'utilise pour le revêtement d'une solution de polymère qui contient le polymère conducteur ionique qui forme la membrane.

16. Procédé selon au moins une des revendications 1 à 15, **caractérisé en ce que**, les composants à laminer sont réunis au moyen de dispositifs de guidage et de positionnement de la manière prévue.

17. Procédé selon au moins une des revendications 1 à 16, **caractérisé en ce que**, les composants à laminer sont réunis au moyen de dispositifs de guidage et de positionnement de la manière prévue et laminés à une pression dans la gamme de 10⁸ a 10¹⁰ Pa.

18. Procédé selon au moins une des revendications 1 à 17, **caractérisé en ce que**, les stratifiés obtenus sont libérés, dans une étape reliée au laminage et couplée en continu avec celui-ci des constituants encore adhérents en excès.

19. Procédé selon la revendication 18, **caractérisé en ce que**, on conduit le stratifié à travers un tronçon de séchage chauffé à une température dans la gamme de 10 à 250° C.

20. Procédé selon la revendication 18, **caractérisé en ce que**, les constituants en excès sont éliminés dans une étape de lavage connectée et le stratifié est ensuite séché.

21. Procédé selon au moins une des revendications 1 à 20, **caractérisé en ce que**, dans une étape reliée en continu au laminage, sur les zones extérieures du stratifié on applique des matériaux d'étanchéité le long desquelles dans l'utilisation ultérieure est nécessaire une étanchéification vis-à-vis des fluides et des gaz.

22. Procédé selon au moins une des revendications 1 à 21, **caractérisé en ce que**, le stratifié est divisé dans un procédé successif au laminage dans les intervalles respectives adapté au emploi ultérieur prévu.
